# EUROPEAN PATENT APPLICATION

(11) **EP 4 826 564 A1**
(43) Date of publication of application: **21.10.2026**
(21) Application number: 24902382.1
(22) Date of filing: 28.10.2024
(51) Int. Cl.: G06F 16/435

(54) **PUSHING METHOD AND APPARATUS, ELECTRONIC DEVICE, AND STORAGE MEDIUM**

(30) Priority: 12.12.2023 CN 202311712142
(71) Applicant: Chengdu Guanghexinhao Technology Co., Ltd., Chengdu, Sichuan 610095 (CN)
(72) Inventor: ZHAO, Wenting, Beijing 100028 (CN)
(74) Representative: Marks & Clerk LLP
(86) International application number: PCT/CN2024/127767
(87) International publication number: WO 2025/123958

(57) **Abstract**

The present application relates to the technical field of computers, and disclosed are a pushing method and apparatus, an electronic device, and a storage medium. The method comprises: in response to a trigger instruction, displaying a push page, the push page comprising a first display region and a second display region, the first display region being used for displaying multimedia information, the second display region being used for displaying information to be recommended, the multimedia information being multimedia information corresponding to an object to be recommended, and the information to be recommended comprising object attribute information of the object to be recommended; and, in response to a first trigger operation for the second display region, determining interaction information corresponding to the second display region, and, if the interaction information meets a preset condition, displaying resource information, a service resource corresponding to the resource information being used for performing an interaction operation on the object to be recommended.

## Description

### CROSS-REFERENCE TO RELATED APPLICATIONS

The present application is based on and claims priority to Chinese Application No. 202311712142.6, filed on December 12, 2023, which is incorporated herein by reference in its entirety.

### TECHNICAL FIELD

The present application relates to the field of computer technologies, and in particular to a pushing method and apparatus, an electronic device, and a storage medium.

### BACKGROUND

With the development of multimedia, multimedia content is increasingly diversified. For example, when a user is viewing multimedia information, an object to be recommended is pushed to the user to facilitate obtaining of the object to be recommended by the user through exchange.

### SUMMARY

The present application is intended to solve at least one of the technical problems existing in the prior art. To this end, the present application proposes a pushing method and apparatus, an electronic device, and a storage medium.

According to a first aspect, the present application provides a pushing method. The method includes:
presenting a push page in response to a trigger instruction, the push page including a first presentation region and a second presentation region, where the first presentation region is configured to present multimedia information, and the second presentation region is configured to present information to be recommended, where the multimedia information is multimedia information corresponding to an object to be recommended, and the information to be recommended includes object attribute information of the object to be recommended; and
determining interaction information corresponding to the second presentation region in response to a first trigger operation for the second presentation region, and presenting resource information in response to the interaction information meeting a preset condition, where a business resource corresponding to the resource information is configured to perform an interaction operation with the object to be recommended.

According to the pushing method of the present application, while the multimedia information is presented in the first presentation region of the push page, the object attribute information of the object to be recommended corresponding to the multimedia information is presented in the second presentation region of the push page, facilitating the user to learn about details of the object to be recommended corresponding to the multimedia information while viewing the multimedia information, thereby improving the effect of pushing the object to be recommended. In response that the interaction information corresponding to the second presentation region meets the preset condition, which indicates that the user is interested in the object to be recommended, the resource information that can be used to perform the interaction operation with the object to be recommended is presented, thereby improving the success rate of recommending the object to be recommended.

According to an embodiment of the present application, the first trigger operation includes an adjustment operation, the interaction information includes a presentation area of the second presentation region after adjustment, and the preset condition includes the presentation area of the second presentation region after adjustment being greater than a preset threshold.

According to an embodiment of the present application, the first trigger operation includes a movement operation for a preset boundary of the second presentation region, the interaction information includes a movement direction of the preset boundary and a post-movement position of the preset boundary, and the preset condition includes the movement direction of the preset boundary being a preset direction and the post-movement position of the preset boundary being a preset position.

According to an embodiment of the present application, the first trigger operation includes a click operation on the information to be recommended in the second presentation region, the interaction information includes clicked information, and the preset condition includes the clicked information being preset information.

According to an embodiment of the present application, the resource information includes at least one of an amount, an interaction condition, an interaction scope, or an interaction time limit of the business resource.

The method further includes:
presenting a page to be recommended in response to a second trigger operation for the resource information, where content presented on the page to be recommended includes the object attribute information of the object to be recommended, and the object attribute information of the object to be recommended includes at least one of an object image, an object name, an object type, an object score, or an object location of the object to be recommended, or an amount of a corresponding business resource.

According to an embodiment of the present application, prior to responding to the trigger instruction, the method further includes:
presenting a multimedia page, where the multimedia page is configured to present multimedia information, and the multimedia information presented on the multimedia page is the same as the multimedia information presented in the first presentation region;
presenting anchor information in a first presentation form on the multimedia page, where the anchor information includes the information to be recommended and/or the resource information; and
receiving a trigger instruction for the anchor information.

According to an embodiment of the present application, prior to presenting the anchor information in the first presentation form on the multimedia page, the method further includes:
presenting the anchor information in a second presentation form on the multimedia page, where the second presentation form is different from the first presentation form in terms of at least one of corresponding presentation region sizes, presentation content, or presentation styles.

Presenting the anchor information in the first presentation form on the multimedia page includes:
converting a presentation form of the anchor information on the multimedia page from the second presentation form to the first presentation form in response to determining that a presentation duration of the multimedia page reaches a target duration.

According to an embodiment of the present application, after presenting the anchor information in the first presentation form on the multimedia page, the method further includes:
converting a presentation form of the anchor information on the multimedia page from the first presentation form to the second presentation form in response to a click operation on a close control corresponding to the anchor information, where the second presentation form is different from the first presentation form in terms of at least one of corresponding presentation region sizes, presentation content, or presentation styles.

According to a second aspect, the present application provides a pushing apparatus. The apparatus includes:
a first presentation module configured to present a push page in response to a trigger instruction, the push page including a first presentation region and a second presentation region, where the first presentation region is configured to present multimedia information, and the second presentation region is configured to present information to be recommended, where the multimedia information is multimedia information corresponding to an object to be recommended, and the information to be recommended includes object attribute information of the object to be recommended; and
a second presentation module configured to determine interaction information corresponding to the second presentation region in response to a first trigger operation for the second presentation region, and present resource information in response to the interaction information meeting a preset condition, where a business resource corresponding to the resource information is configured to perform an interaction operation with the object to be recommended.

According to a third aspect, the present application provides an electronic device. The electronic device includes a memory, a processor, and a computer program stored on the memory and executable by the processor, where the computer program, when executed by the processor, causes the processor to implement the pushing method according to the first aspect.

According to a fourth aspect, the present application provides a non-transitory computer-readable storage medium having stored thereon a computer program that, when executed by a processor, causes the pushing method according to the first aspect to be implemented.

According to a fifth aspect, the present application provides a computer program product including a computer program that, when executed by a processor, causes the pushing method according to the first aspect to be implemented.

### BRIEF DESCRIPTION OF THE DRAWINGS

The above-mentioned and/or additional aspects and advantages of the present application will become apparent and easy to understand from the following description of embodiments with reference to the accompanying drawings, in which:
FIG. 1 is a schematic flowchart of a recommendation method according to an embodiment of the present application;
FIG. 2 is a schematic diagram of a push page in a recommendation method according to an embodiment of the present application;
FIG. 3 is a schematic diagram of resource information in the recommendation method according to an embodiment of the present application;
FIG. 4 is a schematic diagram of a page to be recommended in the recommendation method according to an embodiment of the present application;
FIG. 5 is a schematic diagram of operations in the recommendation method according to an embodiment of the present application;
FIG. 6 is a schematic diagram of anchor information in the recommendation method according to an embodiment of the present application;
FIG. 7 is a schematic diagram of a multimedia page in the recommendation method according to an embodiment of the present application;
FIG. 8 is a schematic structural diagram of a recommendation apparatus according to an embodiment of the present application;
FIG. 9 is a schematic structural diagram of an electronic device according to an embodiment of the present application; and
FIG. 10 is a schematic diagram of hardware of an electronic device according to an embodiment of the present application.

### DETAILED DESCRIPTION

The technical solutions in the embodiments of the present application will be described clearly below with reference to the accompanying drawings in the embodiments of the present application. Apparently, the embodiments described are only some rather than all of the embodiments of the present application. All other embodiments derived by those of ordinary skill in the art on the basis of the embodiments in the present application shall fall within the scope of protection of the present application.

The terms "first", "second", etc. in the description and claims of the present application are used to differentiate between similar objects and not to describe a specific order or sequence. It should be understood that data used in this way is interchangeable where appropriate, so that the embodiments of the present application may be implemented in an order other than those shown or described herein. In addition, the terms "first", "second", etc. are used to distinguish between objects generally of the same type, rather than to limit the number of the objects. For example, there may be one first object, or there may be more first objects. In addition, in the description and claims, "and/or" indicates at least one of the connected objects, and the character "/" generally indicates an "or" relationship between the contextually associated objects.

A pushing method and apparatus, an electronic device, and a storage medium provided in the embodiments of the present application will be described in detail below through specific embodiments and application scenarios thereof in conjunction with the accompanying drawings.

The pushing method may be applied to a terminal, and specifically may be executed by hardware or software in the terminal.

The terminal includes, but is not limited to, a portable communication device, such as a mobile phone or a tablet computer having a touch-sensitive surface (e.g., a touchscreen display and/or a touchpad). It should also be understood that in certain embodiments, the terminal may be a desktop computer having a touch-sensitive surface (e.g., a touchscreen display and/or a touchpad), instead of the portable communication device.

A terminal including a display and a touch-sensitive surface is described in the following embodiments. However, it should be understood that the terminal may include one or more other physical user interface devices such as a physical keyboard, a mouse, or a joystick.

As stated above, with the development of multimedia, multimedia content is increasingly diversified. For example, when a user is viewing multimedia information, an object to be recommended is pushed to the user to facilitate obtaining of the object to be recommended by the user through exchange. However, currently, the effect of pushing the object to be recommended is not satisfactory, and the success rate of recommending the object to be recommended is not high. The present application proposes a pushing method and apparatus, an electronic device, and a storage medium, which can improve both the effect of pushing the object to be recommended and the success rate of recommending the object to be recommended.

The above-mentioned one or more technical solutions in the embodiments of the present application have at least one of the following technical effects.

While multimedia information is presented in a first presentation region of a push page, object attribute information of an object to be recommended corresponding to the multimedia information is presented in a second presentation region of the push page, facilitating the user to learn about details of the object to be recommended corresponding to the multimedia information while viewing the multimedia information, thereby improving the effect of pushing the object to be recommended. In response that interaction information corresponding to the second presentation region meets a preset condition, which indicates that the user is interested in the object to be recommended, resource information that can be used to perform an interaction operation with the object to be recommended is presented, thereby improving the success rate of recommending the object to be recommended.

Additional aspects and advantages of the present application will be set forth in part in the following description, and in part will be apparent from the following description, or may be learned by practice of the present application.

In the pushing method provided in the embodiments of the present application, an execution entity of the pushing method may be an electronic device or a functional module or functional entity in the electronic device that can implement the pushing method. The electronic device mentioned in the embodiments of the present application includes, but is not limited to, a mobile phone, a tablet computer, a computer, a camera, a wearable device, etc. The pushing method provided in the embodiments of the present application is described below using an example in which the electronic device serves as the execution entity.

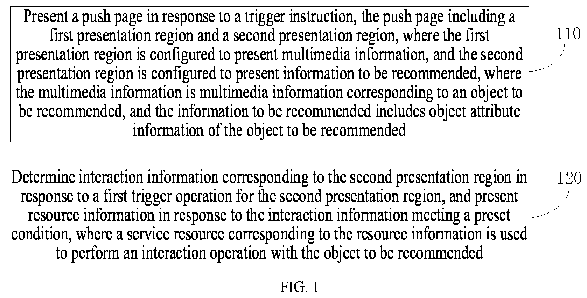

FIG. 1 is a schematic flowchart of a pushing method according to an embodiment of the present application.

As shown in FIG. 1, the pushing method includes: step 110 and step 120.

Step 110: Present a push page in response to a trigger instruction, the push page including a first presentation region and a second presentation region, where the first presentation region is configured to present multimedia information, and the second presentation region is configured to present information to be recommended, where the multimedia information is multimedia information corresponding to an object to be recommended, and the information to be recommended includes object attribute information of the object to be recommended.

In this embodiment, the trigger instruction is a command that triggers the electronic device to perform a corresponding operation. The trigger instruction may be an instruction generated by the electronic device based on a user's trigger operation, or may be an instruction from other electronic devices. The user's trigger operation is an operation performed by the user to control the electronic device. The trigger operation may be embodied as a touch control operation on a display screen of the electronic device, such as a click operation, a swipe operation, and a press operation, and responding to the trigger instruction may be embodied as responding to a trigger instruction generated by the user's touch operation on the display screen of the electronic device. The trigger operation may also be embodied as an operation on a physical key, for example, the electronic device is provided with a physical key corresponding to the display screen, and responding to the trigger instruction may be embodied as responding to a trigger instruction generated by the user's operation on the physical key of the electronic device.

The push page is presented on the electronic device in response to the trigger instruction. The push page may be a display interface of an application running in the electronic device. The push page includes the two presentation regions, namely, the first presentation region and the second presentation region. The first presentation region and the second presentation region may partially cover the push page. That is, the push page may further include other presentation regions. The first presentation region and the second presentation region may also completely cover the push page. That is, the push page may not include other regions. The presentation area of the first presentation region and the presentation area of the second presentation region are not specifically limited. That is, the presentation area of the first presentation region may be greater than the presentation area of the second presentation region, the presentation area of the first presentation region may be less than the presentation area of the second presentation region, or the presentation area of the first presentation region may be equal to the presentation area of the second presentation region. The positions of the first presentation region and the second presentation region on the push page are not specifically limited. For example, the first presentation region and the second presentation region may be arranged side by side, or the first presentation region and the second presentation region may be arranged in a vertical direction.

In the first presentation region, the multimedia information may be presented. The multimedia information may include images, videos, audio, etc. The video may include a live streaming video, a short video (which has a video duration less than a specific duration), a long video (which has a video duration greater than a specific duration), etc.

The object to be recommended is a product and/or place, etc. that is to be recommended to the user. When the object to be recommended is a product, the product may be an exchangeable product, and can be obtained by the user through exchange of the business resource. That is, the business resource may be exchanged for the product. The business resource is any form of virtual resource that can be transmitted over a network, such as electronic currency, or gifts (such as flowers) in a live streaming scenario. The exchangeable product may be a physical product, such as food, clothes and shoes, or may be a virtual voucher, such as an electronic ticket or an insurance product. When the object to be recommended is a place, the place may be a place where an exchangeable product is provided. The place may be an offline physical place, such as a restaurant or a shopping mall, or may be an online place, such as an online supermarket. The object to be recommended may also be other valuable objects, which can be set according to actual needs and are not specifically limited here.

The multimedia information is the multimedia information corresponding to the object to be recommended. The multimedia information may be multimedia information that specifically introduces the object to be recommended. For example, the multimedia information is a promotional video shot specially for the object to be recommended. The multimedia information may also be multimedia information related to the object to be recommended. For example, the multimedia information is a video of sharing daily life, and the object to be recommended is used in the shared daily life. The multimedia information may also be other multimedia information associated with the object to be recommended, which can be set according to actual needs and is not specifically limited here.

In the second presentation region, the information to be recommended may be presented. The information to be recommended is information that is to be recommended to the user. The information to be recommended may include the object attribute information of the object to be recommended. The object attribute information is information that describes an attribute of the object to be recommended. When the object to be recommended is a product, the object attribute information of the object to be recommended may include at least one of an object image, or an object name of the object to be recommended, or an amount of a corresponding business resource. The object image presents the object to be recommended in the form of an image, and the name presents the object to be recommended in the form of text. The business resource may be measured in terms of amount, for example, the amount of the business resource may be the number of gifts in a live streaming scenario. In addition, an action control, etc. corresponding to the object to be recommended may further be presented in the second presentation region. The control is an encapsulation of data and methods, such as a button. In response to a trigger operation on the action control, a business resource of the user may be used to interact with the object to be recommended. That is, the object to be recommended is obtained through exchange of the business resource. Other content related to the object to be recommended may also be presented in the second presentation region, which can be set according to actual needs and is not specifically limited here.

When the object to be recommended is a place, the object attribute information of the object to be recommended may include an object image, an object name, an object score, an object type, an object location, object attribute information of a sub-object, etc. of the object to be recommended. The sub-object is a product provided by the object to be recommended, and the object attribute information of the sub-object may be the same as the object attribute information of the object to be recommended when the object to be recommended is a product, which will not be described in detail here. In addition, a map control, a telephone control, etc. corresponding to the object to be recommended may further be presented in the second presentation region. In response to a trigger operation on the map control, map information may be presented. The map information includes the location of the object to be recommended in the map, such that the user can check out the distance from the object to be recommended. In response to a trigger operation on the telephone control, telephone information may be presented, such that the user can have a further understanding of the object to be recommended through telephone voice. Other content related to the object to be recommended may also be presented in the second presentation region, which can be set according to actual needs and is not specifically limited here.

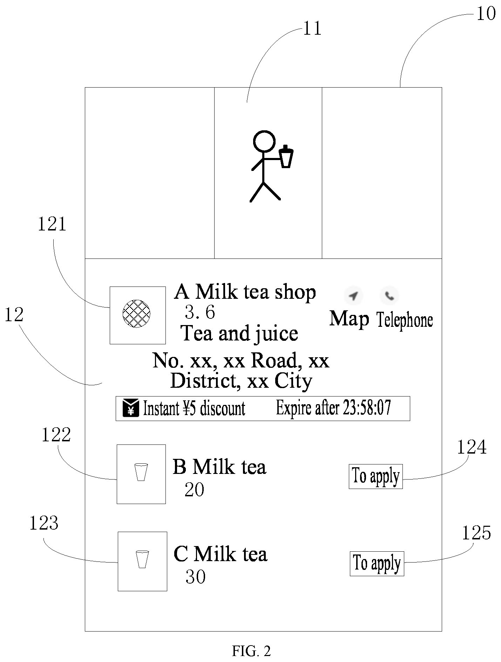

As shown in FIG. 2, a push page 10 includes a first presentation region 11 and a second presentation region 12. The multimedia information presented in the first presentation region 11 includes a video of a person drinking milk tea, and the object to be recommended corresponding to the multimedia information may be a milk tea shop (a place) that provides the milk tea. The information to be recommended that is presented in the second presentation region 12 includes object attribute information of the milk tea shop, such as an image 121, a name "A Milk tea shop", a score "3.6", a type "Tea and juice", and a location "No. xx, xx Road, xx District, xx City" of the milk tea shop. The information to be recommended further includes object attribute information of various kinds of milk tea provided in the milk tea shop, such as an image 122, a name "B Milk tea", and an amount "20" of a corresponding business resource of a kind of milk tea, and an icon 123, a name "C Milk tea", and an amount "30" of a corresponding business resource of another kind of milk tea. In addition, a map control, a telephone control, an action control 124 corresponding to the B milk tea, an action control 125 corresponding to the C milk tea, etc. are further presented in the second presentation region 12.

In FIG. 2, the second presentation region 12 is located below the first presentation region 11, and the presentation area of the second presentation region 12 is greater than the presentation area of the first presentation region 11, such that the user can learn about relevant information of the object to be recommended more clearly and in more detail.

In this embodiment, while the multimedia information is presented in the first presentation region of the push page, the object attribute information of the object to be recommended corresponding to the multimedia information is presented in the second presentation region of the push page, such that the user can learn about details of the object to be recommended corresponding to the multimedia information while viewing the multimedia information, thereby improving the effect of pushing the object to be recommended.

Step 120: Determine interaction information corresponding to the second presentation region in response to a first trigger operation for the second presentation region, and present resource information in response to the interaction information meeting a preset condition, where a business resource corresponding to the resource information is used to perform an interaction operation with the object to be recommended.

The first trigger operation is an operation performed to control the electronic device. The trigger operation may be embodied as a touch operation of the user on a display screen of the electronic device, such as a click operation, a swipe operation, and a press operation. The first trigger operation may also be embodied as an operation on a physical key of the electronic device.

The interaction information corresponding to the second presentation region is determined in response to the first trigger operation for the second presentation region. It is detected whether the interaction information meets the preset condition. In response that the interaction information meets the preset condition, indicating that the user is interested in the information to be recommended that is presented in the second presentation region, that is, the user is interested in the object to be recommended, the resource information is presented in this case. The user is facilitated to obtain the object to be recommended through exchange of the business resource corresponding to the resource information, thereby improving the success rate of recommending the object to be recommended. If the response information does not meet the preset condition, the push page may continue to be presented.

In some embodiments, the first trigger operation may include an adjustment operation for the second presentation region. The adjustment operation is an operation of adjusting the presentation area of the second presentation region, such as a swipe operation for the second presentation region. The interaction information may include a presentation area of the second presentation region after adjustment, and the preset condition may include the presentation area of the second presentation region after adjustment being greater than a preset threshold. The preset threshold is a presentation area threshold that is set in advance, for example, the preset threshold may be the maximum presentation area of the electronic device.

In response to the adjustment operation for the second presentation region, the presentation area of the second presentation region changes, the presentation area of the second presentation region after adjustment is determined, and it is detected whether the presentation area of the second presentation region after adjustment is greater than the preset threshold. In response that the presentation area of the second presentation region after adjustment is greater than the preset threshold, which indicates that the user is interested in the information to be recommended that is presented in the second presentation region, the resource information is presented. In response that the presentation area of the second presentation region after adjustment is less than the preset threshold, the push page may continue to be presented.

In some embodiments, the first trigger operation includes a movement operation for a preset boundary of the second presentation region. The preset boundary of the second presentation region is a boundary of the second presentation region, such as the boundary of the second presentation region close to the first presentation region. The movement operation is an operation of moving the preset boundary of the second presentation region, such as a swipe operation for the preset boundary. The interaction information may include a movement direction of the preset boundary and a post-movement position of the preset boundary. The preset condition may include the movement direction of the preset boundary being a preset direction and the post-movement position of the preset boundary being a preset position. The preset direction is a movement direction that is set in advance, for example, the preset direction may be a direction in which the second presentation region faces the first presentation region. The preset position is a boundary position that is set in advance, such as the position of a boundary of a display interface of the electronic device, where the boundary of the display interface corresponds to the preset boundary of the second presentation region.

In response to the movement operation for the preset boundary of the second presentation region, the movement direction of the preset boundary and the post-movement position of the preset boundary are determined, and it is detected whether the movement direction of the preset boundary is the preset direction and whether the post-movement position of the preset boundary is the preset position. In response that the movement direction of the preset boundary is the preset direction and the post-movement position of the preset boundary is the preset position, which indicates that the user is interested in the information to be recommended that is presented in the second presentation region, the resource information is presented. In response that the movement direction of the preset boundary is not the preset direction or the post-movement position of the preset boundary is not the preset position, the push page may continue to be presented.

In some embodiments, the first trigger operation may include a click operation on the information to be recommended in the second presentation region. The interaction information may include clicked information, i.e., information corresponding to the click operation. The preset condition may include the clicked information being preset information. The preset information is part or all of the information to be recommended that is set in advance, for example, the preset information may include object attribute information of the object to be recommended, such as an object icon, an object name, an object type, an object score, an object location, and an amount of a corresponding business resource of the object to be recommended.

In response to the click operation for the information to be recommended in the second presentation region, clicked information is determined, and it is detected whether the clicked information is the preset information. In response that the clicked information is the preset information, which indicates that the user is interested in the information to be recommended that is presented in the second presentation region, the resource information is presented. In response that the clicked information is not the preset information, the push page may continue to be presented.

The resource information is relevant information that describes the business resource. The resource information may include at least one of an amount, an interaction condition, an interaction scope, an interaction time limit, or an interaction prompt copy of the corresponding business resource. The interaction condition is a condition under which the business resource is subjected to the interaction operation, the interaction scope is an object scope for which the business resource is subjected to the interaction operation, the interaction time limit is a time limit during which the business resource is subjected to the interaction operation, and the interaction prompt copy is a copy that prompts the user to use the business resource to perform the interaction operation. When the resource information is presented, the business resource corresponding to the resource information may be allocated to the user as the business resource of the user. The business resource corresponding to the resource information may be used to perform the interaction operation with the object to be recommended, that is, the user may exchange their business resource (including the business resource corresponding to the resource information) for the object to be recommended.

It should be noted that the resource information may further be presented in the second presentation region of the push page. As shown in FIG. 2, an interaction prompt copy and an amount "Instant ¥5 discount" of the business resource corresponding to the resource information, an interaction time limit "Expire after 23:58:07" of the business resource, etc. may further be presented in the second presentation region 12 of the push page 10.

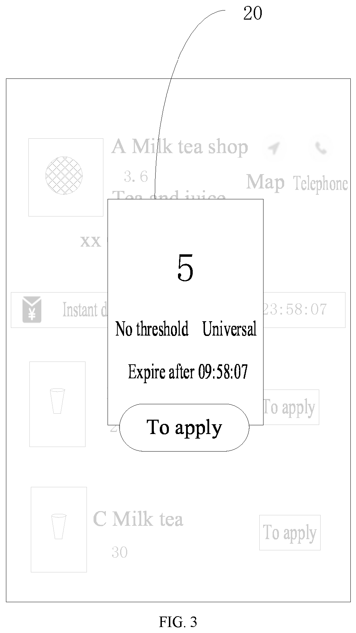

As shown in FIG. 3, in response that the interaction information meets the preset condition, resource information 20 may be presented. The resource information 20 includes an amount "5", an interaction condition "No threshold", an interaction scope "Universal", and an interaction time "Expire after 09:58:07" of the corresponding business resource. The resource information 20 in FIG. 3 may further include an action identifier "To apply" to remind the user to use the business resource corresponding to the resource information 20 as soon as possible to perform an interaction operation with the object to be recommended, that is, to remind the user to exchange the business resource corresponding to the resource information 20 for the object to be recommended as soon as possible.

In some embodiments, the resource information is presented in the form of a pop-up window. The resource information may also be presented in other forms, which are not specifically limited here.

In some embodiments, presenting the resource information in step 120 includes:
presenting the resource information in response that it is determined that a presentation count of the resource information within a first time period does not exceed a target presentation count.

The first time period may be a fixed time period, such as 0:00 to 24:00 on a day.

The target presentation count may be set in advance. The target presentation count may be set to a specific count N, where N≥1. In response that it is detected for the first N times on a day that the interaction information corresponding to the second presentation region meets the preset condition, the resource information may be presented each time. In response that it is detected, starting from the (N+1)^{th} time on the day, that the interaction information corresponding to the second presentation region meets the preset condition, the resource information may no longer be presented. For example, for N = 1, the resource information is presented only in response that it is detected for the first time on the day that the interaction information corresponding to the second presentation region meets the preset condition. The target presentation count may also be set to null, that is, no count is set, and the resource information may be presented every time it is detected that the interaction information corresponding to the second presentation region meets the preset condition.

In some embodiments, in response that it is determined that the interaction information corresponding to the second presentation region meets the preset condition, if the presentation count of the resource information within the first time period exceeds the target presentation count, a page to be recommended may be presented. The page to be recommended is a display interface of the electronic device. The page to be recommended is configured to present the information to be recommended, and the information to be recommended that is presented on the page to be recommended may be the same as the information to be recommended that is presented in the second presentation region.

In some embodiments, the pushing method further includes:
presenting a page to be recommended in response to a second trigger operation for the resource information, where content presented on the page to be recommended includes the object attribute information of the object to be recommended, and the object attribute information of the object to be recommended includes at least one of an object image, an object name, an object type, an object score, or an object location of the object to be recommended, or an amount of a corresponding business resource. The object attribute information of the object to be recommended that is presented on the page to be recommended is the same as the object attribute information of the object to be recommended that is presented in the second presentation region, which will not be described in detail here.

The second trigger operation and the first trigger operation may be presented in the same or different forms. For example, the second trigger operation may be a click operation of the user on the resource information, etc.

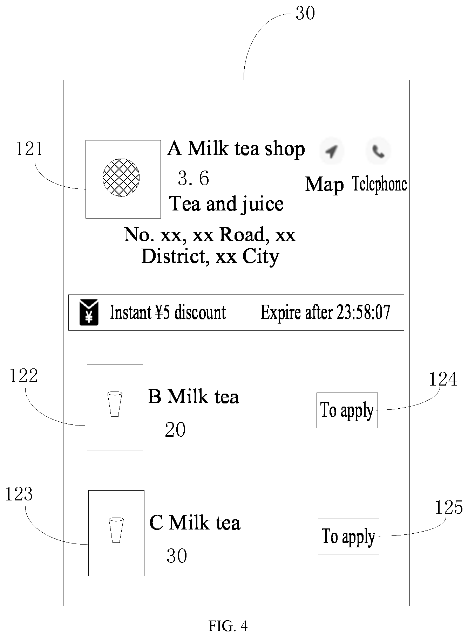

As shown in FIG. 4, the information to be recommended that is presented on a page 30 to be recommended includes object attribute information of the milk tea shop, such as an image 121, a name "A Milk tea shop", a score "3.6", a type "Tea and juice", and a location "No. xx, xx Road, xx District, xx City" of the milk tea shop. The information to be recommended further includes object attribute information of various kinds of milk tea provided in the milk tea shop, such as an image 122, a name "B Milk tea", and an amount "20" of a corresponding business resource of a kind of milk tea, and an icon 123, a name "C Milk tea", and an amount "30" of a corresponding business resource of another kind of milk tea. In addition, a map control, a telephone control, an action control 124 corresponding to the B milk tea, an action control 125 corresponding to the C milk tea, etc. are further presented in the second presentation region 12. An interaction prompt copy and an amount "Instant ¥5 discount" of the business resource corresponding to the resource information, an interaction time limit "Expire after 23:58:07" of the corresponding business resource, etc. may further be presented on the page to be recommended.

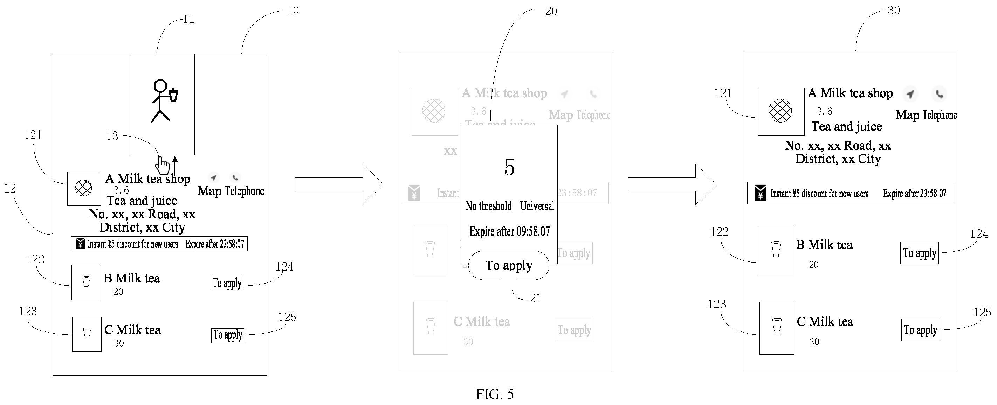

As shown in FIG. 5, in the case of presenting the push page 10, the resource information 20 is presented in response to a first trigger operation (such as a swipe-up operation 13) for the second presentation region 12. The page 30 to be recommended is presented in response to a second trigger operation (such as a click operation 21) for the resource information 20.

In some embodiments, prior to the step of responding to the trigger instruction in step 110, the method further includes:
presenting a multimedia page, where the multimedia page is configured to present multimedia information, and the multimedia information presented on the multimedia page is the same as the multimedia information presented in the first presentation region;
presenting anchor information in a first presentation form on the multimedia page, where the anchor information includes the information to be recommended and/or the resource information; and
receiving a trigger instruction for the anchor information.

The present of the multimedia page may be triggered in a plurality of forms. For example, in the case of presenting another multimedia page, the electronic device may present the multimedia page in this embodiment in response to a swipe operation for the other multimedia page.

The multimedia information presented on the multimedia page is the same as the multimedia information presented in the first presentation region of the push page, which will not be described in detail here.

An anchor is a hyperlink, and anchor information is encapsulated anchor in the form of information. The anchor information may include the information to be recommended and/or the resource information. For example, the anchor information presented in the first presentation form may include the object attribute information of the object to be recommended, such as the object image, the object name, the object type, and the distance from the user of the object to be recommended. The anchor information may further include the resource information, such as the interaction prompt copy and the amount of the corresponding business resource. The anchor information may further include an action icon, etc. to remind the user to perform a trigger operation on the anchor information.

The anchor information may be presented in the first presentation form on the multimedia page. The first presentation form may include a card form, that is, the anchor information is presented as a card on the multimedia page. Presenting the anchor information in the first presentation form on the multimedia page can quickly and effectively attract the user's attention.

The trigger instruction may be a trigger instruction generated in response to a trigger operation for the anchor information, that is, the push page may be presented in response to the trigger instruction for the anchor information.

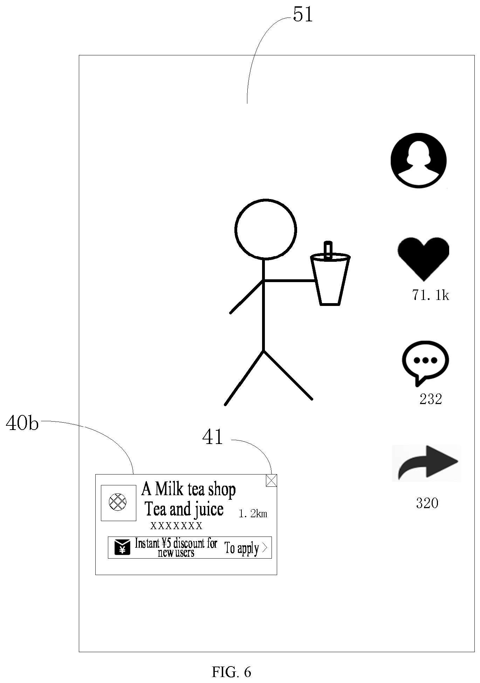

As shown in FIG. 6, anchor information 40b is presented in the first presentation form on the multimedia page 50. The anchor information 40b presented in the first presentation form includes an image 121, a name "A Milk tea shop", a type "Tea and juice", and a distance from the user "1.2 km" of the milk tea shop, an interaction prompt copy and an amount "Instant ¥5 discount" of the business resource corresponding to the resource information, an action icon "To apply", etc.

With reference to FIG. 6 and FIG. 2, the push page 10 in FIG. 2 may be presented in response to a trigger instruction for the anchor information 40b in FIG. 6.

In some embodiments, prior to presenting the anchor information in the first presentation form on the multimedia page, the method further includes:
presenting the anchor information in a second presentation form on the multimedia page, where the second presentation form is different from the first presentation form in terms of at least one of corresponding presentation region sizes, presentation content, or presentation styles.

Presenting the anchor information in the first presentation form on the multimedia page includes: converting a presentation form of the anchor information on the multimedia page from the second presentation form to the first presentation form in response to determining that a presentation duration of the multimedia page reaches a target duration.

The second presentation form and the first presentation form may correspond to different presentation region sizes. For example, the presentation region corresponding to the first presentation form has a greater size than that of the presentation region corresponding to the second presentation form. The second presentation form and the first presentation form may correspond to different presentation styles. For example, the presentation style corresponding to the second presentation form is simpler than the presentation style corresponding to the first presentation form. The second presentation form and the first presentation form may correspond to different presentation content. For example, the presentation content corresponding to the first presentation form is richer than the presentation content corresponding to the second presentation form. For example, the presentation content corresponding to the first presentation form includes the object image, the object name, the object type, and the distance from the user of the object to be recommended, the interaction prompt copy and the amount of the business resource corresponding to the resource information, etc. The presentation content corresponding to the second presentation form may include the object name of the object to be recommended, the interaction prompt copy of the business resource corresponding to the resource information, etc.

Presenting an anchor tag in the second presentation form on the multimedia page allows the object to be recommended to be pushed to the user when the user is viewing the multimedia information, and can also prevent the user from being disturbed when viewing the multimedia information, which affects the user experience.

The presentation duration of the multimedia page is a continuous presentation duration after the multimedia page starts to be presented. The target duration may be a fixed value that is set in advance, such as 4 s. That is, the anchor information is presented in the second presentation form on the multimedia page in the first 4 s of the presentation of the multimedia page. When the presentation duration of the multimedia page reaches 4 s, the second presentation form is converted to the first presentation form, i.e., the anchor information presented in the second presentation form is hidden, and the anchor information is presented in the first presentation form on the multimedia page.

In some embodiments, the target duration is determined based on a comparison result between a presentation reference duration corresponding to the multimedia page and a preset duration. In response that the presentation reference duration is less than the preset duration, the preset duration is the target duration. In response that the presentation reference duration is greater than or equal to the preset duration, the presentation reference duration is the target duration.

The corresponding presentation reference duration is determined based on the multimedia information presented on the multimedia page and/or the object to be recommended corresponding to the multimedia information. Different multimedia information and/or different objects to be recommended correspond to different presentation reference durations. The preset duration is a fixed duration, such as 2 s. The presentation reference duration is compared with the preset duration. In response that the presentation reference duration is less than the preset duration, the preset duration is used as the target duration. That is, In response that the presentation duration of the multimedia page does not reach the preset duration (such as 2 s), the anchor information is presented in the first presentation form on the multimedia page; or In response that the presentation duration of the multimedia page reaches the preset duration (such as 2 s), the anchor information is presented in the second presentation form on the multimedia page. In response that the presentation reference duration is greater than or equal to the preset duration, the presentation reference duration is used as the target duration. That is, In response that the presentation duration of the multimedia page does not reach the presentation reference duration (such as 5 s), the anchor information is presented in the first presentation form on the multimedia page; or In response that the presentation duration of the multimedia page reaches the presentation reference duration (such as 5 s), the anchor information is presented in the second presentation form on the multimedia page.

The position of the anchor information presented in the first presentation form corresponds to the position of the anchor information presented in the second presentation form, but the presentation region for the anchor information presented in the second presentation form may have a greater size than the presentation region for the anchor information presented in the first presentation form. Therefore, the anchor information presented in the second presentation form is more attractive to the user.

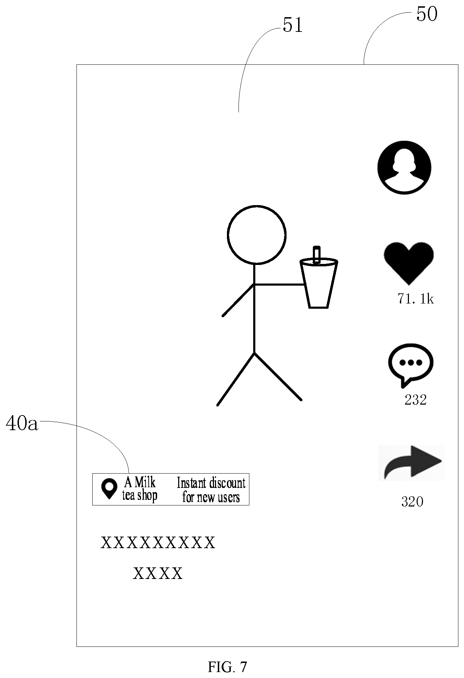

As shown in FIG. 7, multimedia information 51 presented on a multimedia page 50 includes a video of a person drinking milk tea, and anchor information is presented in the second presentation form on the multimedia page 50. The anchor information 40a presented in the second presentation form is located at a lower left corner of the multimedia page 50, and the anchor information 40a presented in the second presentation form includes content such as a name "A Milk tea shop" of the milk tea shop, and an interaction prompt copy "Instant discount" of the business resource corresponding to the resource information.

With reference to FIG. 6, when the presentation duration of the multimedia page 50 reaches the target duration, the anchor information 40b is presented in the first presentation form. The anchor information 40b presented in the first presentation form is located at a lower left corner of the multimedia page 50, and the anchor information 40b presented in the first presentation form includes content such as an image 121, a name "A Milk tea shop", a type "Tea and juice", and a distance from the user "1.2 km" of the milk tea shop, an interaction prompt copy and an amount "Instant ¥5 discount" of the business resource corresponding to the resource information, and an action icon "To apply".

In some embodiments, after presenting the anchor information in the first presentation form on the multimedia page, the method further includes:
converting a presentation form of the anchor information on the multimedia page from the first presentation form to the second presentation form in response to a click operation on a close control corresponding to the anchor information, where the second presentation form is different from the first presentation form in terms of at least one of corresponding presentation region sizes, presentation content, or presentation styles.

The close control corresponding to the anchor information is configured to hide the anchor information presented in the first presentation form. In response to a click operation on the close control corresponding to the anchor information presented in the first presentation form, the anchor information presented in the first presentation form may be hidden, and the anchor information presented in the second presentation form may be presented on the multimedia information.

With reference to FIG. 6 and FIG. 7, the anchor information 40b presented in the first presentation form has a corresponding close control 41. In response to a click operation on the close control 41, the anchor information presented in the first presentation form in FIG. 5 is hidden, and the anchor information presented in the second presentation form in FIG. 6 is presented.

In some embodiments, the step of presenting the anchor information in the first presentation form on the multimedia page includes:
presenting the anchor information in the first presentation form on the multimedia page in response that the trigger condition is met. The trigger condition includes at least one of the following: the object to be recommended being a target type object; the number of clicks on the close control within a second time period failing to reach a first number; and the number of historical clicks on the close control failing to reach a second number.

The target type object may be an object to be recommended of a place type. When the trigger condition includes the object to be recommended being a target type object, it is detected whether the object to be recommended is the target type object. In response that the object to be recommended is the target type object, the anchor information is presented in the first presentation form on the multimedia page. In response that the object to be recommended is not the target type object, the anchor information is presented in the second presentation form on the multimedia page.

The second time period is a fixed time period, such as 0:00 to 24:00 on a day. The first number may be set in advance. The first number may be set to a specific number, such as 2. The number of clicks on the close control within the second time period is the number of times that the anchor information presented in the first presentation form is hidden within the second time period. In response that the trigger condition includes the number of clicks on the close control within a second time period failing to reach a first number, it is detected whether the number of clicks on the close control within the second time period reaches the first number. In response that the first number is not reached, the anchor information is presented in the first presentation form on the multimedia page. In response that the first number is reached, the anchor information is no longer presented in the first presentation form on the day.

The second number may be preset to a specific number, such as 5. The number of historical clicks on the close control is a total number of times that the anchor information presented in the first presentation form is hidden within a historical time period. In response that he trigger condition includes the number of historical clicks on the close control failing to reach the second number, it is detected whether the number of historical clicks on the close control reaches the second number. In response that the second number is not reached, the anchor information is presented in the first presentation form on the multimedia page. In response that the second number is reached, the anchor information will never be presented in the first presentation form.

When the trigger condition includes a plurality of conditions mentioned above, In response that the plurality of conditions are met at the same time, the anchor information is presented in the first presentation form on the multimedia page; or In response that any of the conditions is not met, the anchor information is presented in the second presentation form on the multimedia page.

According to the recommendation method provided in the embodiments of the present application, while the multimedia information is presented in the first presentation region of the push page, the object attribute information of the object to be recommended corresponding to the multimedia information is presented in the second presentation region of the push page, such that the user can learn about details of the object to be recommended corresponding to the multimedia information while viewing the multimedia information, thereby improving the effect of pushing the object to be recommended. In response that the interaction information corresponding to the second presentation region meets the preset condition, which indicates that the user is interested in the object to be recommended, the resource information that can be used to perform the interaction operation with the object to be recommended is presented, thereby improving the success rate of recommending the object to be recommended.

An execution entity of the recommendation method provided in the embodiments of the present application may be a recommendation apparatus. In the embodiments of the present application, the recommendation apparatus provided in the embodiments of the present application is described using an example in which the recommendation apparatus performs the recommendation method.

An embodiment of the present application further provides a recommendation apparatus.

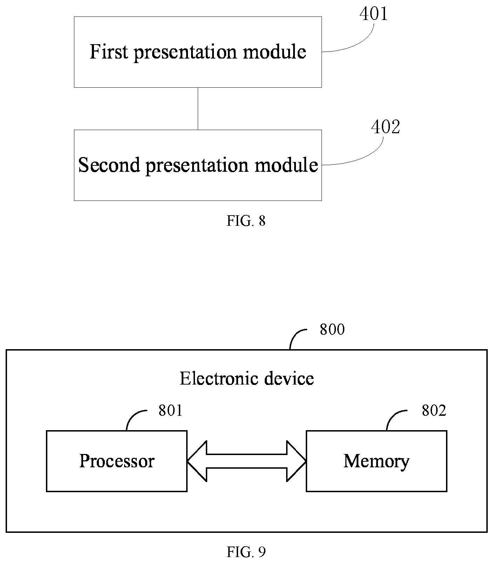

As shown in FIG. 8, the recommendation apparatus includes: a first presentation module 401 and a second presentation module 402.

The first presentation module 401 is configured to present a push page in response to a trigger instruction, the push page including a first presentation region and a second presentation region, where the first presentation region is configured to present multimedia information, and the second presentation region is configured to present information to be recommended, where the multimedia information is multimedia information corresponding to an object to be recommended, and the information to be recommended includes object attribute information of the object to be recommended; and
The second presentation module 402 is configured to determine interaction information corresponding to the second presentation region in response to a first trigger operation for the second presentation region, and present resource information in response to the interaction information meeting a preset condition, where a business resource corresponding to the resource information is configured to perform an interaction operation with the object to be recommended.

According to the pushing apparatus provided in the embodiment of the present application, while the multimedia information is presented in the first presentation region of the push page, the object attribute information of the object to be recommended corresponding to the multimedia information is presented in the second presentation region of the push page, such that the user can learn about details of the object to be recommended corresponding to the multimedia information while viewing the multimedia information, thereby improving the effect of pushing the object to be recommended. In response that the interaction information corresponding to the second presentation region meets the preset condition, which indicates that the user is interested in the object to be recommended, the resource information that can be used to perform the interaction operation with the object to be recommended is presented, thereby improving the success rate of recommending the object to be recommended.

According to an embodiment of the present application, the first trigger operation includes an adjustment operation, the interaction information includes a presentation area of the second presentation region after adjustment, and the preset condition includes the presentation area of the second presentation region after adjustment being greater than a preset threshold.

According to an embodiment of the present application, the first trigger operation includes a movement operation for a preset boundary of the second presentation region, the interaction information includes a movement direction of the preset boundary and a post-movement position of the preset boundary, and the preset condition includes the movement direction of the preset boundary being a preset direction and the post-movement position of the preset boundary being a preset position.

According to an embodiment of the present application, the first trigger operation includes a click operation on the information to be recommended in the second presentation region, the interaction information includes clicked information, and the preset condition includes the clicked information being preset information.

According to an embodiment of the present application, the resource information includes at least one of an amount, an interaction condition, an interaction scope, or an interaction time limit of the business resource.

The apparatus further includes a third presentation module. The third presentation module is configured to:
present a page to be recommended in response to a second trigger operation for the resource information, where content presented on the page to be recommended includes the object attribute information of the object to be recommended, and the object attribute information of the object to be recommended includes at least one of an object image, an object name, an object type, an object score, or an object location of the object to be recommended, or an amount of a corresponding business resource.

According to an embodiment of the present application, the apparatus further includes a fourth presentation module. The fourth presentation module is configured to:
present a multimedia page, where the multimedia page is configured to present multimedia information, and the multimedia information presented on the multimedia page is the same as the multimedia information presented in the first presentation region;
present anchor information in a first presentation form on the multimedia page, where the anchor information includes the information to be recommended and/or the resource information; and
receive a trigger instruction for the anchor information.

According to an embodiment of the present application, the apparatus further includes a fifth presentation module. The fifth presentation module is configured to:
present the anchor information in a second presentation form on the multimedia page, where the second presentation form is different from the first presentation form in terms of at least one of corresponding presentation region sizes, presentation content, or presentation styles.

The fourth presentation module is further configured to:
convert a presentation form of the anchor information on the multimedia page from the second presentation form to the first presentation form in response to determining that a presentation duration of the multimedia page reaches a target duration.

According to an embodiment of the present application, the apparatus further includes a sixth presentation module. The sixth presentation module is configured to:
convert a presentation form of the anchor information on the multimedia page from the first presentation form to the second presentation form in response to a click operation on a close control corresponding to the anchor information, where the second presentation form is different from the first presentation form in terms of at least one of corresponding presentation region sizes, presentation content, or presentation styles.

The pushing apparatus in the embodiments of the present application may be an electronic device, or may be a component in the electronic device, such as an integrated circuit or a chip. The electronic device may be a terminal, or may be a device other than the terminal. For example, the electronic device may be a mobile phone, a tablet computer, a laptop computer, a palmtop computer, an in-vehicle electronic device, a mobile Internet device (MID), an augmented reality (AR)/virtual reality (VR) device, a robot, a wearable device, an ultra-mobile personal computer (UMPC), a netbook or a personal digital assistant (PDA), etc. The electronic device may also be a server, a network attached storage (NAS), a personal computer (PC), a television (TV), an automated teller machine or a self-service machine, etc. This is not specifically limited in the embodiments of the present application.

The pushing apparatus in the embodiments of the present application may be an apparatus having an operating system. The operating system may be a Microsoft (Windows) operating system, an Android operating system, an IOS operating system, or other possible operating systems. This is not specifically limited in the embodiments of the present application.

The pushing apparatus provided in the embodiments of the present application can implement the processes of the method embodiments. To avoid repetition, details are not described here again.

In some embodiments, as shown in FIG. 9, an embodiment of the present application further provides an electronic device 800. The electronic device includes a processor 801, a memory 802, and a computer program stored on the memory 802 and executable by the processor 801. The program, when executed by the processor 801, causes the processes of the above-mentioned recommendation method embodiments to be implemented, and can achieve the same technical effect. To avoid repetition, details are not described here again.

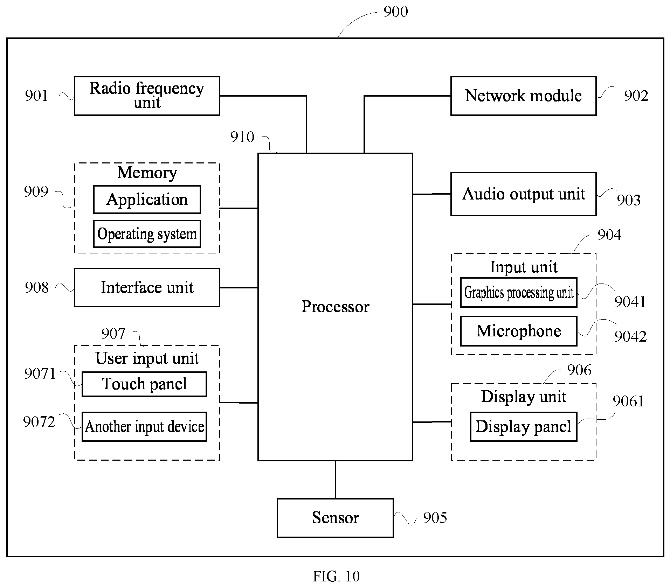

FIG. 10 is a schematic diagram of a hardware structure of an electronic device according to an embodiment of the present application.

The electronic device 900 includes, but is not limited to: components such as a radio frequency unit 901, a network module 902, an audio output unit 903, an input unit 904, a sensor 905, a display unit 906, a user input unit 907, an interface unit 908, a memory 909, and a processor 910.

Those skilled in the art can understand that the electronic device 900 may further include a power supply (for example, a battery) that supplies power to the components. The power supply may be logically connected to the processor 910 through a power supply management system, to implement functions such as charging management, discharging management, and power consumption management through the power supply management system. The structure of the electronic device shown in FIG. 10 does not constitute a limitation on the electronic device. The electronic device may include more or fewer components than those shown, or combine some components, or adopt different component arrangements. Details are not described here.

The processor 910 to is configured to: present a push page by the display unit 906 in response to a trigger instruction, the push page including a first presentation region and a second presentation region, where the first presentation region is configured to present multimedia information, and the second presentation region is configured to present information to be recommended, where the multimedia information is multimedia information corresponding to an object to be recommended, and the information to be recommended includes object attribute information of the object to be recommended; and determine interaction information corresponding to the second presentation region in response to a first trigger operation for the second presentation region, and present resource information by the display unit 906 in response to the interaction information meeting a preset condition, where a business resource corresponding to the resource information is configured to perform an interaction operation with the object to be recommended.

According to the electronic device provided in the embodiment of the present application, while the multimedia information is presented in the first presentation region of the push page, the object attribute information of the object to be recommended corresponding to the multimedia information is presented in the second presentation region of the push page, such that the user can learn about details of the object to be recommended corresponding to the multimedia information while viewing the multimedia information, thereby improving the effect of pushing the object to be recommended. In response that the interaction information corresponding to the second presentation region meets the preset condition, which indicates that the user is interested in the object to be recommended, the resource information that can be used to perform the interaction operation with the object to be recommended is presented, thereby improving the success rate of recommending the object to be recommended.

According to an embodiment of the present application, the first trigger operation includes an adjustment operation, the interaction information includes a presentation area of the second presentation region after adjustment, and the preset condition includes the presentation area of the second presentation region after adjustment being greater than a preset threshold.

According to an embodiment of the present application, the first trigger operation includes a movement operation for a preset boundary of the second presentation region, the interaction information includes a movement direction of the preset boundary and a post-movement position of the preset boundary, and the preset condition includes the movement direction of the preset boundary being a preset direction and the post-movement position of the preset boundary being a preset position.

According to an embodiment of the present application, the first trigger operation includes a click operation on the information to be recommended in the second presentation region, the interaction information includes clicked information, and the preset condition includes the clicked information being preset information.

According to an embodiment of the present application, the resource information includes at least one of an amount, an interaction condition, an interaction scope, or an interaction time limit of the business resource.

The processor 910 is further configured to: present, by the display unit 906, a page to be recommended in response to a second trigger operation for the resource information, where content presented on the page to be recommended includes the object attribute information of the object to be recommended, and the object attribute information of the object to be recommended includes at least one of an object image, an object name, an object type, an object score, or an object location of the object to be recommended, or an amount of a corresponding business resource.

According to an embodiment of the present application, the processor 910 is further configured to: present a multimedia page by the display unit 906, where the multimedia page is configured to present multimedia information, and the multimedia information presented on the multimedia page is the same as the multimedia information presented in the first presentation region; present anchor information by the display unit 906 in a first presentation form on the multimedia page, where the anchor information includes the information to be recommended and/or the resource information; and receive a trigger instruction for the anchor information.

According to an embodiment of the present application, the processor 910 is further configured to: present the anchor information by the display unit 906 in a second presentation form on the multimedia page, where the second presentation form is different from the first presentation form in terms of at least one of corresponding presentation region sizes, presentation content, or presentation styles; and convert a presentation form of the anchor information on the multimedia page from the second presentation form to the first presentation form in response to determining that a presentation duration of the multimedia page reaches a target duration.

According to an embodiment of the present application, the processor 910 is further configured to: convert a presentation form of the anchor information on the multimedia page from the first presentation form to the second presentation form in response to a click operation on a close control corresponding to the anchor information, where the second presentation form is different from the first presentation form in terms of at least one of corresponding presentation region sizes, presentation content, or presentation styles.

It should be understood that in the embodiments of the present application, the input unit 904 may include a graphics processing unit (GPU) 9041 and a microphone 9042. The graphics processing unit 9041 processes image data of a still image or a video obtained by an image capture means (such as a camera) in a video capture mode or an image capture mode. The display unit 906 may include a display panel 9061, and the display panel 9061 may be configured in the form of a liquid crystal display, an organic light-emitting diode, etc. The user input unit 907 includes at least one of a touch panel 9071 and another input device 9072. The touch panel 9071 is also referred to as a touchscreen. The touch panel 9071 may include two parts, namely, a touch detection means and a touch controller. The other input device 9072 may include, but is not limited to, a physical keyboard, a function key (such as a volume control key or an on/off key), a trackball, a mouse, and a joystick. Details are not described here again.

The memory 909 may be configured to store a software program and various types of data. The memory 909 may mainly include a first storage region for storing programs or instructions and a second storage region for storing data. The first storage region may store an operating system, applications or instructions required by at least one function (such as a sound playback function and an image playback function), etc. In addition, the memory 909 may include a volatile memory or a non-volatile memory, or the memory 909 may include both the volatile memory and the non-volatile memory. The non-volatile memory may be a read-only memory (ROM), a programmable read-only memory (PROM), an erasable programmable read-only memory (EPROM), an electrically erasable programmable read-only memory (EEPROM), or a flash memory. The volatile memory may be a random access memory (RAM), a static random-access memory (SRAM), a dynamic random-access memory (DRAM), a synchronous dynamic random-access memory (SDRAM), a double data rate synchronous dynamic random-access memory (DDRSDRAM), an enhanced synchronous dynamic random-access memory (ESDRAM), a synchlink dynamic random-access memory (SLDRAM), and a direct rambus random-access memory (DRRAM). The memory 909 in the embodiments of the present application includes, but is not limited to, these and any other suitable types of memories.

The processor 910 may include one or more processing units. An application processor and a modem processor are integrated into the processor 910. The application processor mainly processes operations involving an operating system, a user interface, an application program, etc. The modem processor mainly processes wireless communication signals, such as a baseband processor. It may be understood that the modem processor may also not be integrated into the processor 910.

An embodiment of the present application further provides a non-transitory computer-readable storage medium having a computer program stored thereon. The computer program, when executed by a processor, causes the processes of the pushing method embodiments described above to be implemented, and can achieve the same technical effect. To avoid repetition, details are not described here again.

The processor is the processor in the electronic device according to the embodiments described above. The readable storage medium includes a computer-readable storage medium, such as a computer read-only memory ROM, a random access memory RAM, a magnetic disk, or an optical disk.

An embodiment of the present disclosure further provides a computer program product including a computer program that, when executed by a processor, causes the above-mentioned pushing method to be performed.

The processor is the processor in the electronic device according to the embodiments described above. The readable storage medium includes a computer-readable storage medium, such as a computer read-only memory ROM, a random access memory RAM, a magnetic disk, or an optical disk.

An embodiment of the present disclosure further provides a computer program product including a computer program that, when executed by a processor, causes the above-mentioned pushing method to be performed.

The processor is the processor in the electronic device according to the embodiments described above. The readable storage medium includes a computer-readable storage medium, such as a computer read-only memory ROM, a random access memory RAM, a magnetic disk, or an optical disk.

An embodiment of the present application further provides a chip. The chip includes a processor and a communication interface. The communication interface is coupled to the processor. The processor is configured to run a program or instructions to implement the processes of the pushing method embodiments described above, and the same technical effect can be achieved. To avoid repetition, details are not described here again.

It should be understood that the chip mentioned in the embodiment of the present application may also be referred to as a system-level chip, a system chip, a chip system, an on-chip system chip, etc.

It should be noted that the terms "include", "comprise", or any other variants thereof herein are intended to cover a non-exclusive inclusion, such that a process, a method, an article, or an apparatus that includes a list of elements not only includes those elements, but also includes other elements that are not explicitly listed, or further includes elements that are inherent to such a process, method, article, or apparatus. In the absence of more restrictions, an element defined by the statement "including/comprising a/an ..." does not exclude another identical element in the process, method, article, or apparatus that includes the element. In addition, it should be noted that the scope of the method and apparatus in the implementations of the present application is not limited to performing the functions in the order shown or discussed, but may also include performing the functions in a substantially simultaneous manner or in a reverse order depending on the functions involved. For example, the methods described may be performed in an order different from that described, and various steps may also be added, omitted, or combined. In addition, features described with reference to some examples may be combined in other examples.

According to the foregoing descriptions of the implementations, those of ordinary skill in the art may clearly understand that the methods of the embodiments described above may be implemented by using software plus a required universal hardware platform, or certainly may be implemented by using hardware. However, in many cases, the former implementation is preferred. Based on such an understanding, the technical solutions of the present application essentially or the part contributing to the prior art may be implemented in a form of a software product. The computer software product is stored in a storage medium, such as a ROM/RAM, a magnetic disk, or an optical disc, and includes several instructions for instructing a terminal (which may be a mobile phone, a computer, a server, a network device, etc.) to perform the methods described in the embodiments of the present application.

The embodiments of the present application are described above with reference to the accompanying drawings, but the present application is not limited to the specific implementations described above, and the specific implementations described above are merely illustrative and not restrictive. Those of ordinary skill in the art may also make many forms in light of the present application without departing from the spirit of the present application and the scope of protection of the claims, all of which fall within the scope of protection of the present application.

In the description of this specification, descriptions with reference to the terms such as "an embodiment", "some embodiments", "illustrative embodiments", "example", "specific example", or "some examples" mean that specific features, structures, materials, or characteristics described with reference to the embodiment or example are included in at least one embodiment or example of the present application. In this specification, the illustrative expressions of the above-mentioned terms do not necessarily refer to the same embodiment or example. Moreover, the specific features, structures, materials or characteristics described can be combined in any one or more embodiments or examples in any suitable manner.

Although the embodiments of the present application have been shown and described, those of ordinary skill in the art can understand that various changes, modifications, substitutions, and variations can be made to these embodiments without departing from the principles and spirit of the present application. The scope of the present application is defined by the claims and equivalents thereof.

## Claims

1. A pushing method, comprising:
presenting a push page in response to a trigger instruction, the push page comprising a first presentation region and a second presentation region, wherein the first presentation region is configured to present multimedia information, and the second presentation region is configured to present information to be recommended, wherein the multimedia information is multimedia information corresponding to an object to be recommended, and the information to be recommended comprises object attribute information of the object to be recommended; and
determining interaction information corresponding to the second presentation region in response to a first trigger operation for the second presentation region, and presenting resource information in response to the interaction information meeting a preset condition, wherein a business resource corresponding to the resource information is configured to perform an interaction operation with the object to be recommended.

2. The pushing method according to claim 1, wherein the first trigger operation comprises an adjustment operation, the interaction information comprises a presentation area of the second presentation region after adjustment, and the preset condition comprises the presentation area of the second presentation region after adjustment being greater than a preset threshold.

3. The pushing method according to claim 1 or 2, wherein the first trigger operation comprises a movement operation for a preset boundary of the second presentation region, the interaction information comprises a movement direction of the preset boundary and a post-movement position of the preset boundary, and the preset condition comprises the movement direction of the preset boundary being a preset direction and the post-movement position of the preset boundary being a preset position.

4. The pushing method according to any one of claims 1 to 3, wherein the first trigger operation comprises a click operation on the information to be recommended in the second presentation region, the interaction information comprises clicked information, and the preset condition comprises the clicked information being preset information.

5. The pushing method according to any one of claims 1 to 4, wherein the resource information comprises at least one of an amount, an interaction condition, an interaction scope, an interaction time limit, or an interaction prompt copy of the business resource; and
the method further comprises:
presenting a page to be recommended in response to a second trigger operation for the resource information, wherein content presented on the page to be recommended comprises the object attribute information of the object to be recommended, and the object attribute information of the object to be recommended comprises at least one of an object image, an object name, an object type, an object score, or an object location of the object to be recommended, or an amount of a corresponding business resource.

6. The pushing method according to any one of claims 1 to 5, wherein prior to responding to the trigger instruction, the method further comprises:
presenting a multimedia page, wherein the multimedia page is configured to present multimedia information, and the multimedia information presented on the multimedia page is the same as the multimedia information presented in the first presentation region;
presenting anchor information in a first presentation form on the multimedia page, wherein the anchor information comprises the information to be recommended and/or the resource information; and
receiving a trigger instruction for the anchor information.

7. The pushing method according to claim 6, wherein prior to presenting the anchor information in the first presentation form on the multimedia page, the method further comprises:
presenting the anchor information in a second presentation form on the multimedia page, wherein the second presentation form is different from the first presentation form in terms of at least one of corresponding presentation region sizes, presentation content, or presentation styles; and
presenting the anchor information in the first presentation form on the multimedia page comprises:
converting a presentation form of the anchor information on the multimedia page from the second presentation form to the first presentation form in response to determining that a presentation duration of the multimedia page reaches a target duration.

8. The pushing method according to claim 6, wherein after presenting the anchor information in the first presentation form on the multimedia page, the method further comprises:
converting a presentation form of the anchor information on the multimedia page from the first presentation form to the second presentation form in response to a click operation on a close control corresponding to the anchor information, wherein the second presentation form is different from the first presentation form in terms of at least one of corresponding presentation region sizes, presentation content, or presentation styles.

9. A pushing apparatus, comprising:
a first presentation module configured to present a push page in response to a trigger instruction, the push page comprising a first presentation region and a second presentation region, wherein the first presentation region is configured to present multimedia information, and the second presentation region is configured to present information to be recommended, wherein the multimedia information is multimedia information corresponding to an object to be recommended, and the information to be recommended comprises object attribute information of the object to be recommended; and
a second presentation module configured to determine interaction information corresponding to the second presentation region in response to a first trigger operation for the second presentation region, and present resource information in response to the interaction information meeting a preset condition, wherein a business resource corresponding to the resource information is configured to perform an interaction operation with the object to be recommended.

10. An electronic device, comprising a memory, a processor, and a computer program stored on the memory and executable by the processor, wherein the program, when executed by the processor, causes the processor to implement the pushing method according to any one of claims 1 to 8.

11. A non-transitory computer-readable storage medium having a computer program stored thereon, wherein the computer program, when executed by a processor, causes the pushing method according to any one of claims 1 to 8 to be implemented.

12. A computer program product comprising a computer program, wherein the computer program, when executed by a processor, causes the pushing method according to any one of claims 1 to 8 to be implemented.

13. A computer program that, when executed by a processor, causes the method according to any one of claims 1 to 8 to be implemented.
